# EUROPÄISCHE PATENTSCHRIFT

(11) **EP 1 693 145 B1**
(45) Veröffentlichungstag und Bekanntmachung des Hinweises auf die Patenterteilung: **09.04.2008**
(21) Anmeldenummer: 05003225.9
(22) Anmeldetag: 16.02.2005
(51) Int. Cl.: B23Q 7/04, B23Q 7/14, B23Q 7/00, B23Q 1/01

(54) **Werkstück-Bearbeitungs-Anlage mit einem vertikal verschiebbaren Werkstückgreifer**
Workpiece machining installation with a vertically movable workgripper
Installation d'usinage avec pince porte-pièce mobile verticalement

(43) Veröffentlichungstag der Anmeldung: 23.08.2006
(73) Patentinhaber: Cross Hüller GmbH, 71636 Ludwigsburg (DE)
(72) Erfinder: Nussbaum, Jörg-Michael, 71638 Ludwigsburg (DE); Strohhäcker, Klaus, 71638 Ludwigsburg (DE)
(74) Vertreter: Rau, Manfred

(56) Entgegenhaltungen:
- EP-A- 1 430 990
- DE-C1- 3 428 992

## Beschreibung

Die Erfindung betrifft eine Werkstück-Bearbeitungs-Anlage nach dem Oberbegriff des Anspruches 1 (siehe, z.B., EP-1 430 990-A). Bei derartigen Werkstück-BearbeitungsAnlagen sind üblicherweise zwischen benachbarten Werkzeugmaschinen sogenannte Dachwannen vorgesehen, die ein Verschleppen von Kühlmittel und Schmierstoff durch Heruntertropfen vom Werkstück aus den Werkzeugmaschinen verhindern. Außerdem sollen diese Dachwannen verhindern, dass bei einem fehlerhaften Absenken der Lade-Einrichtung zwischen den Werkzeugmaschinen eine Personen-Gefährdung eintritt. Diese Dachwannen werden daher aus relativ starken Blechen hergestellt. Alternativ werden zusätzliche Sicherheitsluken eingebaut, die im Bedarfsfall zugezogen werden. Derartige Lösungen sind aufwändig und kostenintensiv.

Der Erfindung liegt die Aufgabe zu Grunde, eine Werkstück-Bearbeitungs-Anlage der gattungsgemäßen Art so auszugestalten, dass mit einfachen Mitteln eine Gefährdung von Personen oder Anlagenteilen durch fehlerhaftes Absenken der Lade-Einrichtung vermieden wird.

Diese Aufgabe wird erfindungsgemäß durch die Merkmale im Kennzeichnungsteil des Anspruches 1 gelöst. Kern der Erfindung ist es, das Absenken der Lade-Einrichtung an den Stellen generell zu unterbinden, an denen ein Absenken aus Betriebsgründen nicht notwendig sein kann. An den Stellen, an denen ein Absenken aus Betriebsgründen notwendig ist, können ein- und ausrückbare Absenk-Sperren vorgesehen sein.

Weitere vorteilhafte Ausgestaltungen der Erfindung ergeben sich aus den Unteransprüchen.

Weitere Merkmale, Vorteile und Einzelheiten der Erfindung ergeben sich aus der nachfolgenden Beschreibung eines Ausführungsbeispieles an Hand der Zeichnung. Es zeigt
- Fig. 1: eine Frontansicht einer Werkstück-Bearbeitungs-Anlage nach der Erfindung,

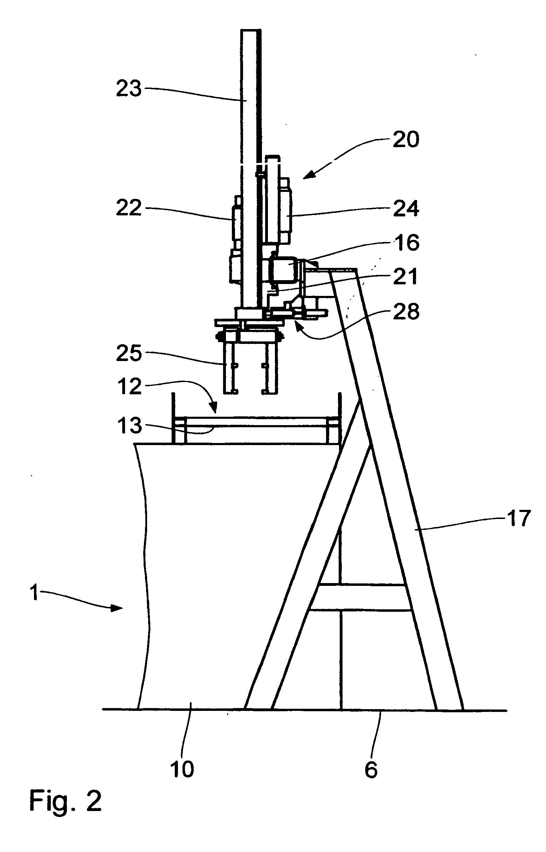

- Fig. 2: eine Seitenansicht der Anlage gemäß dem Sichtpfeil II in Fig. 1,
- Fig. 3: eine Teil-Seitenansicht der Anlage mit einer ortsfesten Absenk-Sperre und
- Fig. 4: eine Teil-Seitenansicht mit einer ein- und ausrückbaren Absenk-Sperre.

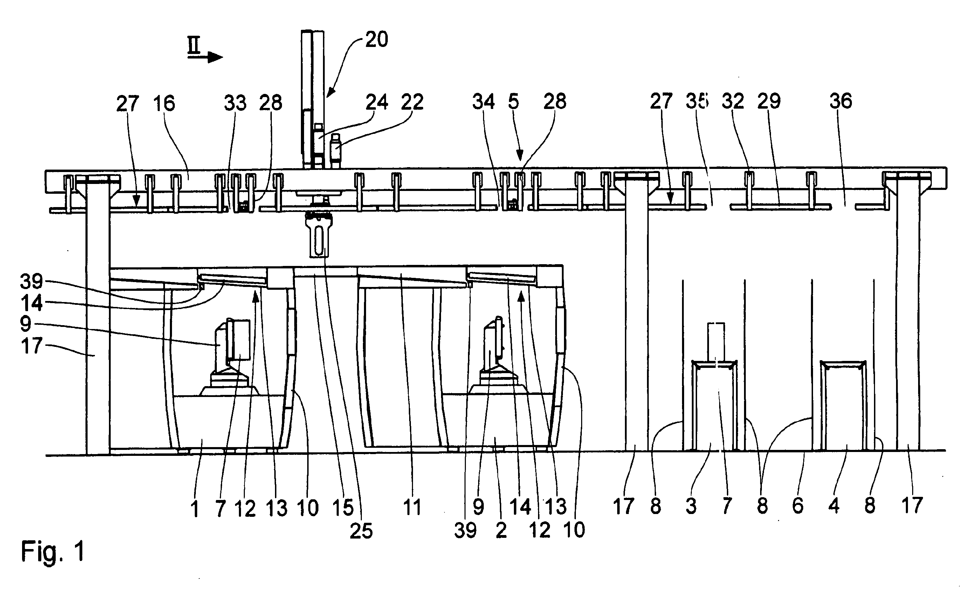

Wie sich insbesondere aus Fig. 1 ergibt, weist eine Werkstück-Bearbeitungs-Anlage mehrere Werkzeugmaschinen 1, 2, eine Werkstück-Zuführ-Einrichtung 3, eine Werkstück-Abführ-Einrichtung 4 und eine diese verbindende Werkstück-Transport-Einrichtung 5 auf. Die Werkzeugmaschinen 1, 2 und die Einrichtungen 3, 4 sind auf einem Fundament 6 abgestützt. Die Werkstück-Zuführ-Einrichtung 3 dient zur Zuführung zu bearbeitender Werkstücke 7 zur Werkstück-Transport-Einrichtung 5; die Werkstück-Abführ-Einrichtung 4 dient zum Ab- und Weiter-Transport von auf den Werkzeugmaschinen 1, 2 bearbeiteten Werkstücken. Die Einrichtungen 3, 4 sind mit Schutzzäunen 8 versehen.

Die Werkzeugmaschinen 1, 2 weisen Werkstück-Halter 9 auf, in denen die zu bearbeitenden Werkstücke 7 gehalten werden. Die Werkzeugmaschinen 1, 2 sind von Gehäusen 10 umgeben, die jeweils mittels eines Daches 11 nach oben verschlossen sind. Im Dach 11 sind oberhalb des WerkstückHalters 9 jeweils eine Beschickungs-Luke 12 angeordnet, die jeweils durch einen Lukendeckel 13 verschließbar ist. Dieser Lukendeckel 13 wird mittels eines Linear-Antriebes 14 geöffnet bzw. geschlossen. Die den Gehäusen 10 benachbarten Werkzeugmaschinen 1, 2 sind jeweils im Bereich ihres jeweiligen Daches mittels einer Dachwanne 15 aus dünnem Blech miteinander verbunden, die zum Auffangen von herabtropfendem Öl oder Spänen dient.

Die Werkstück-Transport-Einrichtung 5 weist einen oberhalb der Werkzeugmaschinen 1, 2 und der Einrichtungen 3, 4 angeordneten Längs-Träger 16 auf, der über Stützen 17 gegenüber dem Fundament 6 abgestützt ist. Die Längs-Träger 16 und die Stützen 17 bilden ein Gestell. An diesem als Hohlkastenprofil ausgebildeten Längs-Träger 16 sind Führungs-Schienen 18, 19 angebracht, auf denen eine Lade-Einrichtung 20 für die Werkstücke 7 verfahrbar ist. Die Lade-Einrichtung 20 weist einen auf den Führungs-Schienen 18, 19 verfahrbaren Transport-Schlitten 21 auf, der mittels eines Verfahr-Antriebes 22 längs der Führungs-Schienen 18, 19, also längs des Längs-Trägers 16, verfahrbar ist. Am Transport-Schlitten 21 ist ein Hub-Schlitten 23 vertikal verschiebbar angebracht, der mittels eines Hub-Antriebes 24 bewegbar ist. Am unteren Ende des Hub-Schlittens 23 ist ein zangenartiger Werkstück-Greifer 25 angebracht, der mittels eines Greifer-Antriebes 26 zum Ergreifen bzw. Loslassen eines Werkstücks 7 geschlossen bzw. geöffnet werden kann.

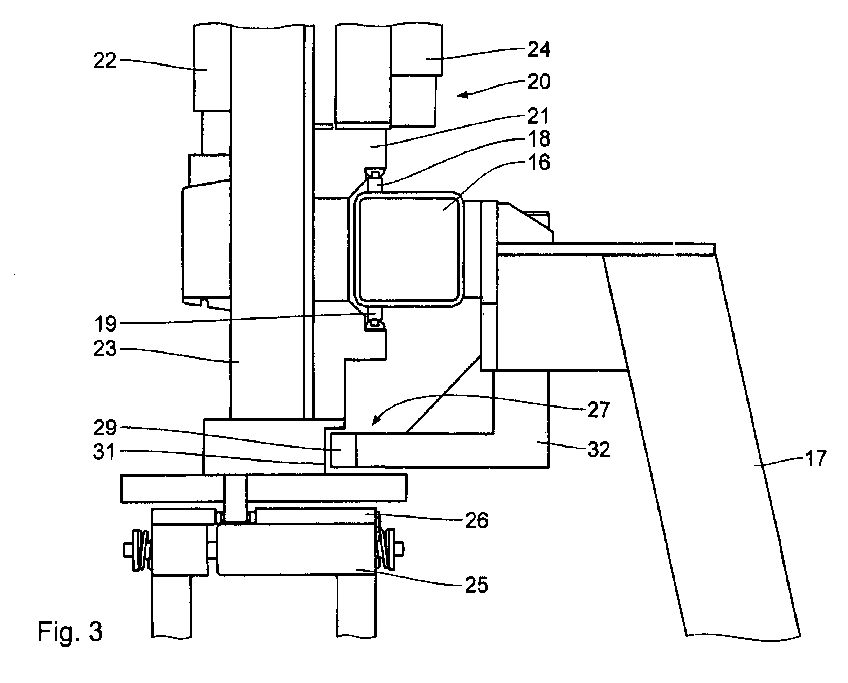

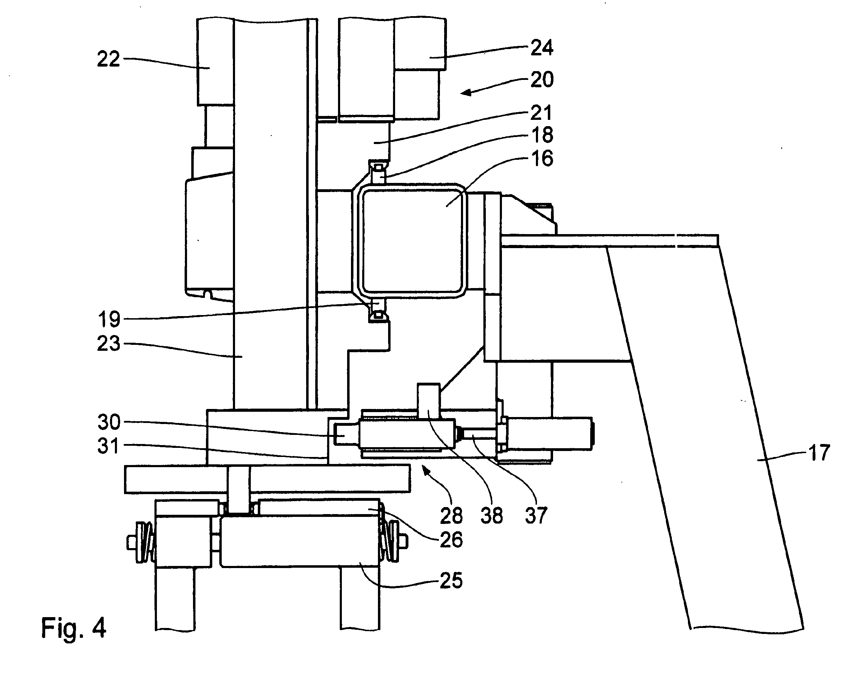

Um ein unbeabsichtigtes Absenken der Lade-Einrichtung 20 zu vermeiden, sind Absenk-Sperren 27 und 28 vorgesehen. Diese weisen in Längsrichtung des Längs-Trägers 16 verlaufende und an diesem angebrachte, als Riegel dienende Stangen 29 bzw. 30 auf, die in eine entsprechende Ausnehmung 31 an der Unterseite des Hub-Schlittens 23 und oberhalb des Greifers 25 untergreifen, wie insbesondere aus den Fig. 3 und 4 hervorgeht. Die ortsfesten Absenk-Sperren 27 weisen Stangen 29 auf, die mit Haltearmen 32 fest am Längs-Träger 16 angebracht sind, die also ihre Position nicht ändern. Derartige ortsfeste Absenk-Sperren 27 sind längs des gesamten Verfahrweges der Lade-Einrichtung 20 angeordnet mit Ausnahme einer Be- und Entlade-Stellung 33, 34 vertikal über den BeschickungsÖffnungen 12 der Werkzeugmaschinen 1, 2 und oberhalb der AufnahmeStellung 35 der Zuführ-Einrichtung 3 und der Abgabe-Stellung 36 der Abführ-Einrichtung 4. Hier sind zwischen den Stangen 29 der ortsfesten Absenk-Sperren 27 Lücken vorgesehen, wie Fig. 1 erkennen lässt. In den Be- und Entlade-Stellungen 33, 34 über den Beschickungs-Luken 12 sind die Absenk-Sperren 28 ein- und ausrückbar ausgebildet. Hierzu sind die Stangen 30 horizontal und quer zur Längsrichtung des Längs-Trägers 16 mittels eines Ein- und Ausrück-Antriebes 37 betätigbar. Dieser Antrieb 37 ist in der Regel als Linear-Antrieb, und zwar üblicherweise als pneumatisch beaufschlagbarer Kolben-Zylinder-Antrieb, ausgebildet. Wenn eine als Riegel dienende Stange 29 bzw. 30 in eine Ausnehmung 31 der Lade-Einrichtung 20 eingreift, dann wird ein nach unten sichernder Formschluss zwischen Stange 29 bzw. 30 und Lade-Einrichtung 20 hergestellt.

Mittels eines Sicherheits-Schalters 38 wird sichergestellt, dass die Absenk-Sperre 28 nur geöffnet werden kann, wenn die darunter befindliche Luke 13 geöffnet ist. In gleicher Weise können an den Lukendeckeln 13 Sicherheits-Schalter 39 vorgesehen sein, über die sichergestellt wird, dass ein Absenken der Lade-Einrichtung 20 nur möglich ist, wenn die Beschickungs-Luken 12 geöffnet sind. In den Lücken betreffend die AufnahmeStellung 35 und die Abgabe-Stellung 36 sind keinerlei Absenk-Sperren vorgesehen.

## Patentansprüche

1. Werkstück-Bearbeitungs-Anlage,
- mit mehreren nebeneinander angeordneten Werkzeugmaschinen (1, 2),
- mit mindestens einer Werkstück-Zuführ- bzw. Abführ-Einrichtung (3, 4),
- mit einer die Werkzeugmaschinen (1, 2) und die mindestens eine Werkstück-Zuführ- bzw. Abführ-Einrichtung (3, 4) miteinander verbindenden Werkstück-Transport-Einrichtung (5),
-- die eine oberhalb der Werkzeugmaschinen (1, 2) und der mindestens einen Werkstück-Zuführ- bzw. Abführ-Einrichtung (3, 4) angeordnete Lade-Einrichtung (20) aufweist,
--- die zwischen Be- und Entlade-Stellen (33, 34) oberhalb der Werkzeugmaschinen (1, 2) und mindestens einer Aufnahme- und Abgabe-Stelle (35, 36) oberhalb der mindestens einen Werkstück-Zuführ- bzw. Abführ-Einrichtung (3, 4) verfahrbar ausgebildet ist und
--- die einen vertikal verschiebbaren Hub-Schlitten (23) mit einem Werkstück-Greifer (25) aufweist,
**dadurch gekennzeichnet,**
**dass** Absenk-Sperren (27) vorgesehen sind, die ein Absenken des Werkstück-Greifers (25) zwischen den Be- und Entlade-Stellungen (33, 34) verhindern.

2. Werkstück-Bearbeitungs-Anlage nach Anspruch 1, **dadurch gekennzeichnet,**
**dass** an den Be- und Entlade-Stellen (33, 34) ein- und ausrückbare Absenk-Sperren (28) vorgesehen sind.

3. Werkstück-Bearbeitungs-Anlage nach Anspruch 1, **dadurch gekennzeichnet,**
**dass** die Absenk-Sperren (27, 28) an einem Trag-Gestell (16, 17) der Werkstück-Transport-Einrichtung (5) angeordnet sind.

4. Werkstück-Bearbeitungs-Anlage nach Anspruch 3, **dadurch gekennzeichnet,**
**dass** die Absenk-Sperren (27, 28) dem Trag-Gestell (16, 17) und dem Hub-Schlitten (23) zugeordnete Paarungen von Riegeln (29, 30) und Ausnehmungen (31) aufweisen, die bei Ineinandergreifen eine AbsenkBewegung des Hub-Schlittens (23) ausschließen.

5. Werkstück-Bearbeitungs-Anlage nach Anspruch 4, **dadurch gekennzeichnet,**
**dass** die Riegel (30) mittels eines Ein- und Ausrück-Antriebes (37) verschiebbar sind.

6. Werkstück-Bearbeitungs-Anlage nach einem der Ansprüche 1 bis 5, **dadurch gekennzeichnet,**
**dass** die mindestens eine Aufnahme- und Abgabe-Stelle (35, 36) oberhalb der mindestens einen Werkstück-Zuführ- bzw. Abführ-Einrichtung (3, 4) frei von einer Absenk-Sperre ist.

7. Werkstück-Bearbeitungs-Anlage nach einem der Ansprüche 1 bis 6, **dadurch gekennzeichnet,**
**dass** die Be- und Entlade-Stellen (33, 34) vertikal oberhalb von Beschickungs-Luken (12) der Werkzeugmaschinen (1, 2) angeordnet sind.

8. Werkstück-Bearbeitungs-Anlage nach Anspruch 7, **dadurch gekennzeichnet,**
**dass** die Beschickungs-Luken (12) mittels Lukendeckeln (13) verschließbar sind.

9. Werkstück-Bearbeitungs-Anlage nach einem der Ansprüche 1 bis 8, **dadurch gekennzeichnet,**
**dass** zwischen benachbarten Werkzeugmaschinen (1, 2) Dachwannen (15) aus dünnem Blech angeordnet sind.

## Claims

1. A work treatment installation, comprising
- a plurality of side-by-side machine tools (1, 2);
- at least one work supply and discharge device (3, 4);
- a work transport device (5) connecting the machine tools (1, 2) and the at least one work supply and discharge device (3, 4);
-- the work transport device (5) comprising a loader (20) which is disposed above the machine tools (1, 2) and the at least one work supply and discharge device (3, 4);
--- the loader (20) being embodied for displacement between charge and discharge positions (33, 34) above the machine tools (1, 2) and at least one pick-up and drop-down position (35, 36) above the at least one work supply and discharge device (3, 4), and
--- comprising a vertically displaceable lifting skid (23) which has a work grab (25);
**characterized**
**in that** lowering stops (27) are provided, preventing any lowering of the work grab (25) between the charge and discharge positions (33, 34).

2. A work treatment installation according to claim 1, **characterized**
**in that** engageable and disengageable lowering stops (28) are provided in the charge and discharge positions (33, 34).

3. A work treatment installation according to claim 1, **characterized**
**in that** the lowering stops (27, 28) are disposed on a supporting frame (16, 17) of the work transport device (5).

4. A work treatment installation according to claim 3, **characterized**
**in that** the lowering stops (27, 28) comprise pairs of latches (29, 30) and recesses (31) which are allocated to the supporting frame (16, 17) and the lifting skid (23) and which, upon interengagement, preclude any lowering motion of the lifting skid (23).

5. A work treatment installation according to claim 4, **characterized**
**in that** the latches (30) are displaceable by an engaging and disengaging drive mechanism (37).

6. A work treatment installation according to one of claims 1 to 5, **characterized**
**in that** the at least one pick-up and drop-down position (35, 36) above the at least one work supply and discharge device (3, 4) is free from a lowering stop.

7. A work treatment installation according to one of claims 1 to 6, **characterized**
**in that** the charge and discharge positions (33, 34) are disposed vertically above charge doors (12) of the machine tools (1, 2).

8. A work treatment installation according to claim 7, **characterized**
**in that** lids (13) are provided for closing the charge doors (12).

9. A work treatment installation according to one of claims 1 to 8, **characterized**
**in that** overhead tanks (15) of thin sheet metal are disposed between neighbouring machine tools (1, 2).

## Revendications

1. Installation d'usinage de pièce,
- avec plusieurs machines-outils (1, 2) disposées côte à côte,
- avec au moins un dispositif d'avance ou d'évacuation de pièce (3, 4),
- avec un dispositif de transport de pièce (5) reliant entre eux les machines-outils (1, 2) et le ou les dispositifs d'avance ou d'évacuation de pièce (3, 4),
-- lequel comporte un dispositif de chargement (20) disposé au-dessus des machines-outils (1, 2) et du ou des dispositifs d'avance ou d'évacuation de pièce (3, 4),
--- qui est déplaçable entre des points de chargement et de déchargement (33, 34) au-dessus des machines-outils (1, 2) et d'au moins un point de réception et de transfert (35, 36) au-dessus du ou des dispositifs d'avance ou d'évacuation de pièce (3, 4), et
--- qui comporte un chariot de levage (23) mobile verticalement, avec un préhenseur de pièce (25),
**caractérisée**
**en ce que** des barrières de descente (27) sont prévues pour empêcher une descente du préhenseur de pièce (25) entre les points de chargement et de déchargement (33, 34).

2. Installation d'usinage de pièce selon la revendication 1, **caractérisée**
**en ce que** des barrières de descente (28) embrayables et débrayables sont prévues sur les points de chargement et de déchargement (33, 34).

3. Installation d'usinage de pièce selon la revendication 1, **caractérisée**
**en ce que** les barrières de descente (27, 28) sont disposées sur un châssis porteur (16, 17) du dispositif de transport de pièce (5).

4. Installation d'usinage de pièce selon la revendication 3, **caractérisée**
**en ce que** les barrières de descente (27, 28) comportent des verrous (29, 30) et des évidements (31) accouplés affectés au châssis porteur (16, 17) et au chariot de levage (23), qui excluent tout mouvement de descente du chariot de levage (23) par engagement les uns dans les autres.

5. Installation d'usinage de pièce selon la revendication 4, **caractérisée**
**en ce que** les verrous (30) sont mobiles au moyen d'un entraînement d'embrayage et de débrayage (37).

6. Installation d'usinage de pièce selon l'une des revendications 1 à 5, **caractérisée**
**en ce que** le ou les points de réception et de transfert (35, 36) sont exempts de barrière de descente au-dessus du ou des dispositifs d'avance ou d'évacuation de pièce (3, 4).

7. Installation d'usinage de pièce selon l'une des revendications 1 à 6, **caractérisée**
**en ce que** les points de chargement et de déchargement (33, 34) sont disposés verticalement au-dessus d'ouvertures d'équipement (12) des machines-outils (1, 2).

8. Installation d'usinage de pièce selon la revendication 7, **caractérisée**
**en ce que** les ouvertures d'équipement (12) sont obturables par des couvercles d'ouverture (13).

9. Installation d'usinage de pièce selon l'une des revendications 1 à 8, **caractérisée**
**en ce que** des bacs de toit (15) en tôle mince sont disposés entre des machines-outils (1, 2) adjacentes.
